# EUROPEAN PATENT APPLICATION

(11) **EP 2 843 957 A1**
(43) Date of publication of application: **04.03.2015**
(21) Application number: 14169909.0
(22) Date of filing: 26.05.2014
(51) Int. Cl.: H04N 21/2665, H04N 21/2747

(54) **A recording and reproducing device and recording and reproducing method**

(30) Priority: 30.08.2013 JP 2013180659
(71) Applicant: Kabushiki Kaisha Toshiba, Tokyo 105-8001 (JP)
(72) Inventor: Nakagawa, Tomoki, Tokyo, 105-8001 (JP); Ito, Hiroaki, Tokyo, 105-8001 (JP); Shibutani, Manabu, Tokyo, 105-8001 (JP); Miyazaki, Megumi, Tokyo, 105-8001 (JP)
(74) Representative: Henkel, Breuer & Partner

(57) **Abstract**

According to one embodiment, a recording and reproducing device (200) includes a generator (305), a collection module (301), a determination module (302) and an integration module (303). The generator (305) generates first relevant information being a list of program information on recorded program contents. The collection module (301) collects, from one or a plurality of other recording and reproducing devices (100) connected to a network, second relevant information being a list of program information on program contents recorded by the other recording and reproducing devices (100). The determination module (302) determines whether the second relevant information contains second program information being program information not registered in the first relevant information. When the determination module (302) determines that the second relevant information contains the second program information, the integration module (303) integrates the second grogram information in the second relevant information into the first relevant information.

## Description

### FIELD

Embodiments described herein relate generally to a recording and reproducing device and a recording and reproducing method.

### BACKGROUND

In recent years, there have been developed recording and reproducing devices with a time-shift machine function. With the time-shift machine function, a recording and reproducing device can automatically record programs on a plurality of channels simultaneously for many hours, and store them in a hard disk drive (HDD) . This enables a user to select a program content that the user wants to watch from a past program guide without setting recording of any specific program content, so that the user can watch the program content.

A technology has also been developed in which the user can reproduce and watch, on the recording and reproducing device, a program content recorded by other recording and reproducing devices in a home network by using the digital living network alliance (DLNA) function.

The time-shift machine function described above has a limitation on the maximum number of channels that the recording and reproducing device can record up to, for example, eight channels, thus it is difficult for the recording and reproducing device to automatically record programs of all broadcasting stations. When the user sets a certain time period not to be recorded by the recording and reproducing device, programs broadcast during the time period are not recorded even when the time-shift machine function is implemented, thus the user cannot watch the programs.

The recording and reproducing device can reproduce program contents recorded by other recording and reproducing devices by using the DLNA function, but it cannot easily search the other recording and reproducing devices for program contents that are not recorded by the recording and reproducing device. BRIEF DESCRIPTION OF THE DRAWINGS

A general architecture that implements the various features of the invention will now be described with reference to the drawings. The drawings and the associated descriptions are provided to illustrate embodiments of the invention and not to limit the scope of the invention.
FIG. 1 is an exemplary diagram illustrating the network configuration of a recording and reproducing system according to a first embodiment;
FIG. 2 is an exemplary block diagram illustrating an example of a main signal processing system of a digital television in the first embodiment;
FIG. 3 is an exemplary block diagram illustrating an example of a functional configuration, with regard to a recording and reproducing function, of a controller in the first embodiment;
FIG. 4 is an exemplary diagram illustrating an example of metadata in the first embodiment;
FIG. 5 is an exemplary flowchart illustrating an example of the procedure for displaying a program guide in the first embodiment;
FIG. 6 is an exemplary sequence diagram illustrating an example of the procedure for collecting metadata in the first embodiment;
FIG. 7 is an exemplary flowchart illustrating an example of the procedure for merging metadata in the first embodiment;
FIG. 8 is an exemplary diagram illustrating an example of metadata collected from another recording and reproducing device in the first embodiment;
FIG. 9 is an exemplary diagram illustrating an example of metadata collected from another digital television in the first embodiment;
FIG. 10 is an exemplary diagram illustrating an example of display of a past program guide filled with program information in the first embodiment;
FIG. 11 is an exemplary flowchart illustrating an example of the procedure for displaying a program guide according to a second embodiment;
FIG. 12 is an exemplary diagram illustrating an example of a program guide containing a message of "retrieving" in the second embodiment;
FIG. 13 is an exemplary block diagram illustrating a functional configuration, with regard to a recording and reproducing function, of a controller of a digital television according to a third embodiment;
FIG. 14 is an exemplary flowchart illustrating an example of the procedure for displaying Zanmai Play in the third embodiment; and
FIG. 15 is an exemplary diagram illustrating an example of Zanmai Play in the third embodiments.

### DETAILED DESCRIPTION

In general, according to one embodiment, a recording and reproducing device comprises a recording module, a generator, a collection module, a determination module, an integration module and a display module. The recording module is configured to simultaneously record programs on a plurality of channels as program contents to store, in a storage, the recorded program contents. The generator is configured to generate first relevant information being a list of program information on the recorded program contents. The collection module is configured to collect, from one or a plurality of other recording and reproducing devices connected to a network, second relevant information being a list of program information on program contents recorded by the other recording and reproducing devices. The determination module is configured to determine whether the second relevant information contains second program information being program information not registered in the first relevant information. When the determination module determines that the second relevant information contains the second program information, the integration module is configured to integrate the second program information in the second relevant information into the first relevant information. The display module is configured to display, as a past program guide, the first relevant information into which the second program information is integrated.

### First Embodiment

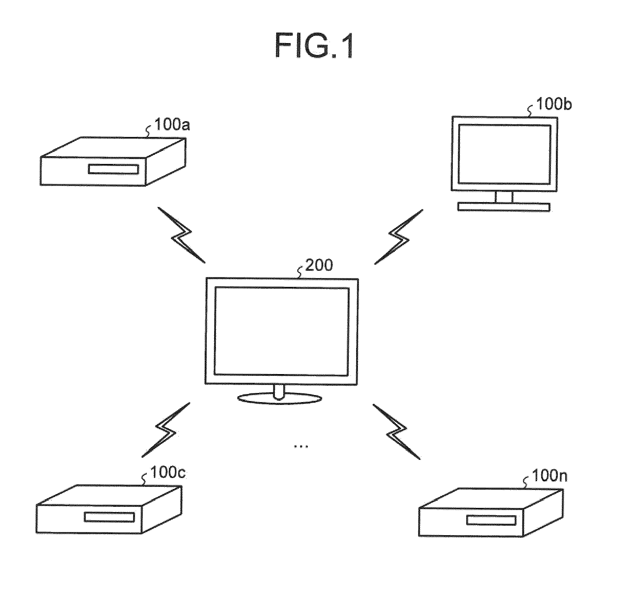

As illustrated in FIG. 1, a recording and reproducing system according to a first embodiment comprises a plurality of recording and reproducing devices 100a, 100c to 100n, and digital televisions 200 and 100b that are connected to each other via a wireless network such as Wi-Fi (registered trademark). The digital televisions 200 and 100b have a recording and reproducing function and are examples of the recording and reproducing devices.

Each of the recording and reproducing devices 100a, 100c to 100n and the digital televisions 200 and 100b can reproduce program contents recorded by the other devices of the recording and reproducing devices 100a, 100c to 100n and the digital televisions 200 and 100b via the network using the DLNA function.

The first embodiment describes the digital television 200 that has a recording and reproducing function. The recording and reproducing devices 100a, 100c to 100n, and the digital television 100b are hereinafter collectively referred to as the other recording and reproducing devices 100.

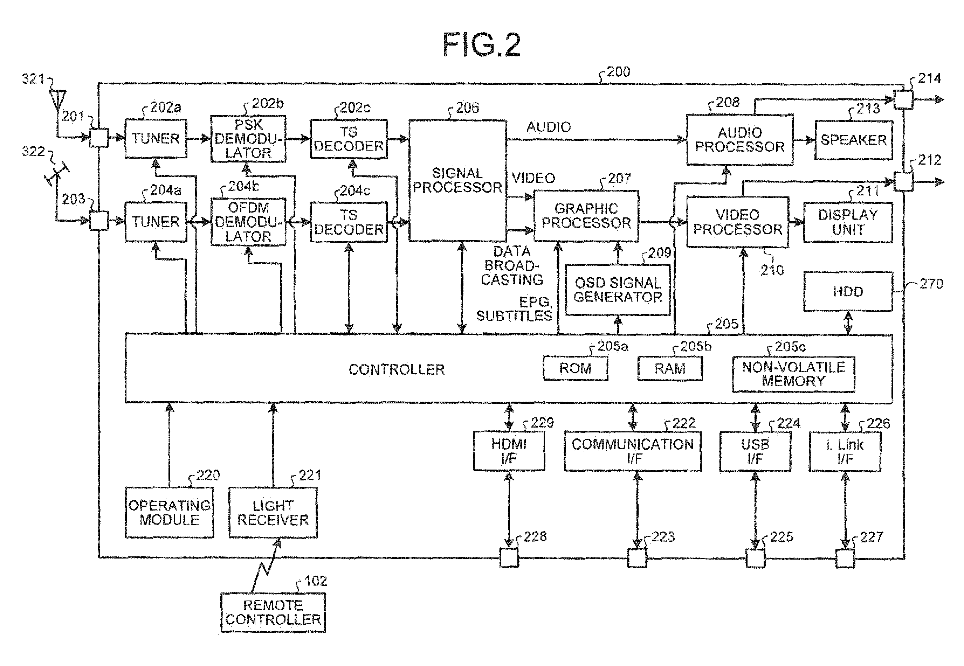

As illustrated in FIG. 2, the digital television 200 mainly comprises a display unit 211, a speaker 213, a hard disk drive (HDD) 270, an operating module 220, a light receiver 221, a LAN terminal 223, an HDMI (registered trademark) terminal 228, a USB terminal 225, an i. Link (registered trademark) terminal 227, broadcast signal input terminals 201 and 203, output terminals 212 and 214, tuners 202a and 204a, an HDMI (registered trademark) I/F 229, a communication I/F 222, a USB I/F 224, an i.Link I/F 226, a phase shift keying (PSK) demodulator 202b, an orthogonal frequency division multiplexing (OFDM) demodulator 204b, transport stream (TS) decoders 202c and 204c, a signal processor 206, an audio processor 208, a graphic processor 207, an on-screen display (OSD) signal generator 209, a video processor 210, and a controller 205.

An antenna 321 for BS/CS digital broadcasting receives satellite digital television broadcast signals and sends the signals via the input terminal 201 to the tuner 202a used for satellite digital broadcasting.

The tuner 202a selects a broadcast signal of a desired channel by a control signal from the controller 205, and outputs the selected broadcast signal to the PSK demodulator 202b.

The PSK demodulator 202b demodulates, by a control signal from the controller 205, the broadcast signal selected by the tuner 202a, obtains transport stream (TS) containing a desired program, and outputs the transport stream to the TS decoder 202c.

The TS decoder 202c decodes, by a control signal from the controller 205, signals multiplexed by the transport stream, depackets digital video signals and digital audio signals of the desired program to obtain packetized elementary stream (PES), and outputs the PES to the signal processor 206. The TS decoder 202c also outputs section information transmitted on digital broadcasting to the signal processor 206.

An antenna 322 for terrestrial broadcasting receives terrestrial digital television broadcast signals and sends the signals via the input terminal 203 to the tuner 204a used for digital terrestrial broadcasting.

The tuner 204a selects a broadcast signal of a desired channel by a control signal from the controller 205, and outputs the selected broadcast signal to the OFDM demodulator 204b.

The OFDM demodulator 204b demodulates, by a control signal from the controller 205, the broadcast signal selected by the tuner 204a, obtains transport stream containing a desired program, and outputs the transport stream to the TS decoder 204c.

The TS decoder 204c decodes, by a control signal from the controller 205, signals multiplexed by the transport stream, depackets digital video signals and digital audio signals of the desired program to obtain packetized elementary stream (PES), and outputs the PES to the signal processor 206. The TS decoder 204c also outputs section information transmitted on digital broadcasting to the signal processor 206.

When the digital television 200 is showing a program, the signal processor 206 selectively performs predetermined digital signal processing on the digital video signals and the digital audio signals sent from the TS decoders 202c and 204c, and outputs the digital video signals to the graphic processor 207 and the digital audio signals to the audio processor 208. When the digital television 200 is recording programs, the signal processor 206 selectively performs predetermined digital signal processing on the digital video signals and the digital audio signals sent from the TS decoders 202c and 204c, and records the digital video signals and the digital audio signals in the HDD 270 through the controller 205. When the digital television 200 is reproducing a recorded program, the signal processor 206 performs predetermined digital signal processing on data of the recorded program read out from the HDD 270 through the controller 205, and outputs the data to the graphic processor 207 and the audio processor 208.

The graphic processor 207 combines a digital video signal sent from the signal processor 206 with an OSD signal generated at the OSD signal generator 209, image data on data broadcasting, and an electronic program guide (EPG) and a subtitle signal generated by the controller 205, and outputs the resulting signal to the video processor 210. The digital video signal output from the graphic processor 207 is input to the video processor 210.

The video processor 210 converts the input digital video data into an analog video signal so that the display unit 211 can display, and outputs the analog video signal to the display unit 211 to display a video image. The display unit 211 can display video data of up to 4K2K video data. The video processor 210 can otherwise output, to an external display unit (not illustrated) via the output terminal 212, a video signal in a format displayable on the external display unit to display a video image.

The audio processor 208 converts an input digital audio signal into an analog audio signal so that the speaker 213 can reproduce, and outputs the analog audio signal to the speaker 213 to reproduce sound. The audio processor 208 can otherwise output, to an external audio outputting device (not illustrated) via the output terminal 214, an audio signal in a format reproducible on the external audio outputting device to reproduce sound.

All the operations comprising the receiving operations described above of the digital television 200 are centrally controlled by the controller 205. The controller 205 comprises a central processing unit (CPU). The controller 205 receives operating information from the operating module 220, or receives operating information transmitted from a remote controller 102 via the light receiver 221, and controls each module of the digital television 200 so that each operation (such as a channel switching operation) contained in the operating information is implemented.

In this case, the controller 205 mainly uses a read only memory (ROM) 205a that stores therein a control program executed by the CPU, a random access memory (RAM) 205b that provides the CPU with a work area, and a non-volatile memory 205c such as a flash memory that stores therein, for example, various types of setting information control information, and program information.

The controller 205 is connected to the LAN terminal 223 via the communication I/F 222. This enables the controller 205 to communicate, via the communication I/F 222, information with a device (such as an external HDD) that can be used in a LAN connected to the LAN terminal 223, In this case, the controller 205 implements a dynamic host configuration protocol (DHCP) server function with which the controller 205 assigns an internet protocol (IP) address to the device that can be used in a LAN connected to the LAN terminal 223, and controls the device.

The controller 205 is connected to the USB terminal 225 via the USB I/F 224. This enables the controller 205 to communicate information with various types of devices connected to the USB terminal 225 via the USB I/F 224.

The controller 205 is connected to the i. Link terminal 227 via the i.Link I/F 226. This enables the controller 205 to communicate information with various types of devices connected to the i.Link terminal 227 via the i.Link I/F 226.

The controller 205 is connected to the HDMI terminal 228 via the HDMI I/F 229. This enables the controller 205 to communicate information with devices connected to the HUMI terminal 228 via the HDMI I/F 229. Examples of the devices connected to the HDMI terminal 228 include the other recording and reproducing devices 100, an AV amplifier, a personal computer (PC), and a broadband router. The HDMI I/F 229 receives video data from the other recording and reproducing devices 100.

The controller 205 also has a recording and reproducing function; in other words, the controller 205 records received broadcasting programs as program contents, stores the program contents in the HDD 270, and reproduces the program contents stored in the HDD 270. The following describes this recording and reproducing function of the controller 205.

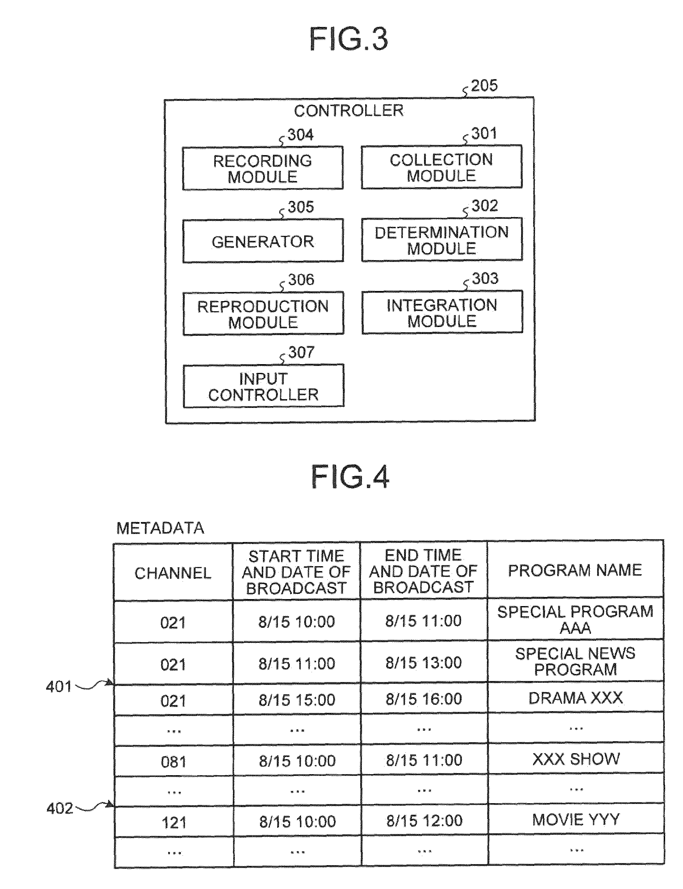

As illustrated in FIG. 3, the controller 205 mainly comprises a collection module 301, a determination module 302, an integration module 303, a recording module 304, a generator 305, a reproduction module 306, and an input controller 307.

The input controller 307 receives various types of input by the user from the remote controller 102 or the operating module 220.

The recording module 304 records, as program contents, broadcast programs received at the tuners 202a and 204a, and stores the recorded program contents in the HDD 270. The recording module 304 according to the first embodiment records programs on a plurality of channels simultaneously and regularly and stores them in the HDD 270, which is called a time-shift machine function. The time-shift machine function is an example of a specific function.

The generator 305 generates metadata on the program contents recorded in the HDD 270, and stores the metadata in the HDD 270 or the non-volatile memory 205c. The metadata is a list of program information on the recorded program contents, and is displayed on the display unit 211 as a past program guide. The program information is information on program contents and comprises channels of the program contents, the start time and date of broadcast, the end time and date of broadcast, and the names of the program contents.

As illustrated in FIG. 4, for example, the metadata registers therein a plurality of pieces of the program information each comprising a channel, the start time and date of broadcast, the end time and date of broadcast, and the name of the program. The metadata (first relevant information) in FIG. 4 illustrates a list of program contents recorded by the digital television 200 using the time-shift machine function, and is stored in the HDD 270 or the non-volatile memory 205c. As illustrated in FIG. 4, the metadata does not register therein any program information during a time period from 13:00 to 15:00 on August 15 indicated by reference sign 401 because the user set the time period not to be recorded. This means that the digital television 200 did not record any program contents during the time period on a channel 021.

As illustrated in FIG. 4, the metadata does not register therein any program information on a channel (a channel 100 that should appear in the position indicated by reference sign 402) between a channel 081 and a channel 121 on August 15 because of, for example, a limitation on the number of channels that the digital television 200 can record. This means that the digital television 200 did not record any program contents on the channel 100 on August 15.

The collection module 301 collects, from the other recording and reproducing devices 100, metadata (second relevant information) stored in the other recording and reproducing devices 100 via the communication I/F 222. Specifically, the collection module 301 sends requests for metadata to the other recording and reproducing devices 100 at regular intervals to collect metadata from the other recording and reproducing devices 100. More specifically, the collection module 301 inquires, before sending requests for metadata, whether the other recording and reproducing devices 100 have the time-shift machine function, and collects metadata from the other recording and reproducing devices 100 that respond to the inquiry.

The determination module 302 determines whether there is any unrecorded (unregistered) program information in the metadata of the digital television 200. When determining that there is unrecorded program information in the metadata of the digital television 200, the determination module 302 then determines whether the metadata of the other recording and reproducing devices 100 collected by the collection module 301 contains the program information (second program information) not recorded in the metadata of the digital television 200. The determination module 302 performs such determination processing at the regular intervals described above at which the collection module 301 collects metadata from the other recording and reproducing devices 100.

When the determination module 302 determines that the metadata of the other recording and reproducing devices 100 contains the program information not recorded in the metadata of the digital television 200, the integration module 303 integrates (merges), into the metadata of the digital television 200, the program information not recorded in the metadata of the digital television 200 but recorded in the metadata of the other recording and reproducing devices 100. The integration module 303 performs such integration processing at the regular intervals described above at which the collection module 301 collects metadata from the other recording and reproducing devices 100.

The reproduction module 306 reproduces a program content of program information specified by a user from, for example, a past program guide. When the program content of the program information specified by the user is stored in the other recording and reproducing devices 100, the reproduction module 306 accesses the other recording and reproducing devices 100 using the DLNA function to obtain the program content, and reproduces the content.

The graphic processor 207 and the video processor 210 described above display, on the display unit 211, as a past program guide, the metadata of the digital television 200 into which the program information not recorded in the metadata of the digital television 200 but recorded in the metadata of the other recording and reproducing devices 100 is integrated.

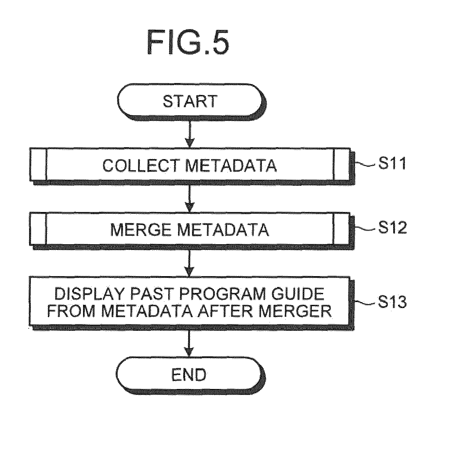

Next, with reference to FIG. 5, described is the procedure for displaying a program guide according to the first embodiment configured as described above. First, the collection module 301 collects metadata (S11). Then, the integration module 303 merges the collected metadata into metadata of the digital television 200 (S12). The collection of metadata at S11 and the merger of metadata at S12 are performed at regular intervals.

The graphic processor 207 and the video processor 210 display, on the display unit 211, a past program guide created from the metadata after the merger (S13).

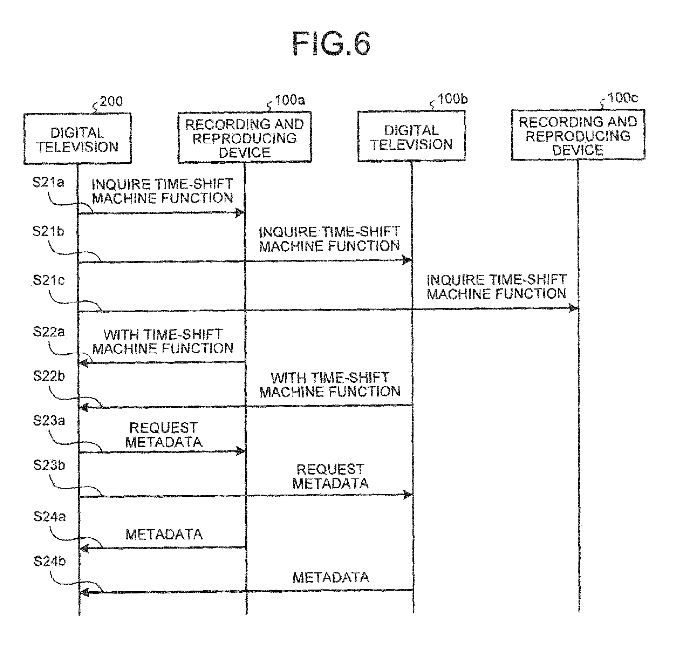

Next, with reference to FIG. 6, described in detail is the procedure for collecting metadata at S11. First, the collection module 301 of the digital television 200 transmits, to all the other recording and reproducing devices 100 on the network, an inquiry whether they have the time-shift machine function (S21a, S21b, S21c). Assume that on the network are the recording and reproducing device 100a, the digital television 100b, and the recording and reproducing device 100c.

When a device among the other recording and reproducing devices 100 has the time-shift machine function, the device transmits, to the digital television 200, a message that it has the time-shift machine function in response to the inquiry (S22a, S22b) . In the example of FIG. 6, assume that the recording and reproducing device 100a and the digital television 100b have the time-shift machine function, but the recording and reproducing device 100c does not have the time-shift machine function. Thus, the recording and reproducing device 100a and the digital television 100b transmit messages that they have the time-shift machine function to the digital television 200, but the recording and reproducing device 100c does not transmit a response to the digital television 200.

The collection module 301 of the digital television 200 transmits a request for metadata to devices (that is, the recording and reproducing device 100a and the digital television 100b) of the other recording and reproducing devices 100 that have transmitted the messages that they have the time-shift machine function (S23a, S23b).

When receiving the request for metadata, the recording and reproducing device 100a and the digital television 100b each transmit metadata stored therein to the digital television 200 (S24a, S24b). When the collection module 301 of the digital television 200 receives the metadata transmitted from the recording and reproducing device 100a and the digital television 100b, the collection of metadata is completed. The digital television 200 temporarily stores metadata collected from the other recording and reproducing devices 100 in the HDD 270 or the non-volatile memory 205c, for example.

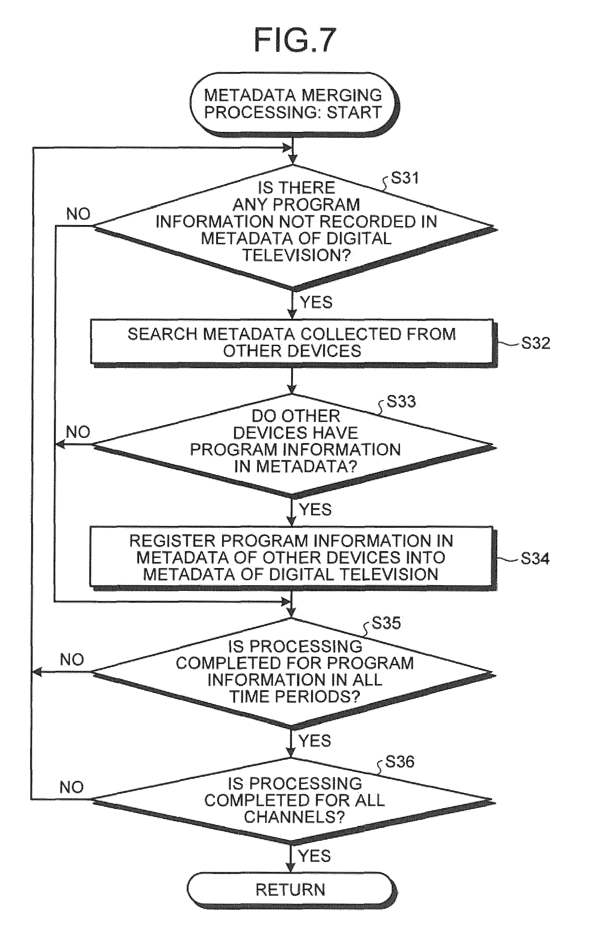

Next, with reference to FIG. 7, described is the procedure for merging metadata at S12. First, the integration module 303 of the digital television 200 selects a certain time period and a certain channel, and determines whether there is unrecorded (unregistered) program information in the metadata of the digital television 200 in the selected time period and the selected channel (S31).

When there is unrecorded program information (Yes at S31), the determination module 302 searches the metadata of the other recording and reproducing devices 100 collected at S11 for the program information not recorded in the metadata of the digital television 200 (S32). The determination module 302 determines whether the metadata of the other recording and reproducing devices 100 contains the program information not recorded in the metadata of the digital television 200 (S33).

When the metadata of the other recording and reproducing devices 100 contains the program information not recorded in the metadata of the digital television 200 (Yes at S33), the integration module 303 registers, in the metadata of the digital television 200, the program information not recorded in the metadata of the digital television 200 but recorded in the metadata of the other recording and reproducing devices 100 (S34).

When the metadata of the other recording and reproducing devices 100 does not contain the program information not recorded in the metadata of the digital television 200 (No at S33), the process at S34 is not performed. When there is no unrecorded program information in the metadata of the digital television 200 (No at S31), the processes from S32 to S34 are not performed.

The integration module 303 determines whether the processes from S31 to S34 have been completed for program information in all the time periods in the metadata of the digital television 200 (S35). When determining that the processes have not been completed (No at S35), the integration module 303 performs the processes from S31 to S34 on program information in the next time period.

When the integration module 303 determines that the processes from S31 to S34 have been completed for program information in all the time periods in the metadata of the digital television 200 (Yes at S35), the integration module 303 determines whether the processes from S31 to S35 have been completed for program information on all the channels in the metadata of the digital television 200 (S36). When determining that the processes have not been completed (No at S36), the integration module 303 performs the processes from S31 to S35 on program information on the next channel.

When the integration module 303 determines that the processes from S31 to S35 have been completed for program information on all the channels in the metadata of the digital television 200 (Yes at S36), the merger of metadata is completed.

Assume that the digital television 200 has the metadata illustrated in FIG. 4. As described above, the metadata in FIG. 4 does not register therein program information in the time period from 13:00 to 15:00 on August 15 (see reference sign 401). The metadata in FIG. 4 does not register therein program information on the channel 100 on August 15 (see reference sign 402).

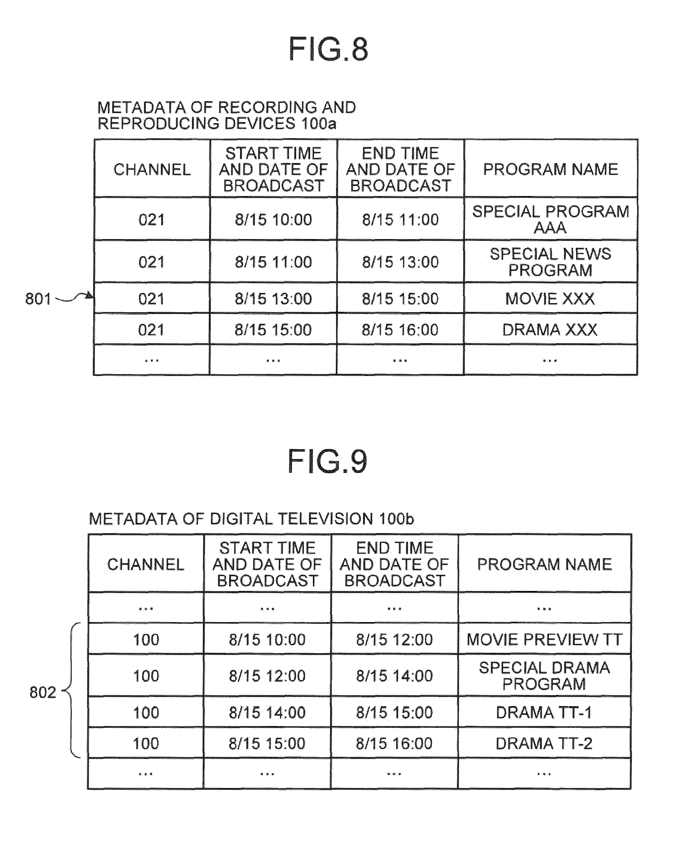

FIG. 8 illustrates an example of metadata collected from the other recording and reproducing device 100a. FIG. 9 illustrates an example of metadata collected from the digital television 100b that is one of the other recording and reproducing devices 100.

The metadata collected from the recording and reproducing device 100a registers therein program information in the time period from 13:00 to 15:00 on August 15 as indicated by reference sign 801 in FIG. 8. This means that the recording and reproducing device 100a recorded a program content broadcast during the time period from 13:00 to 15:00 on August 15 that was not recorded by the digital television 200 and thus not registered as program information in the metadata of the digital television 200.

The metadata collected from the digital television 100b registers therein program information on the channel 100 on August 15 as indicated by reference sign 802 in FIG. 9. This means that the digital television 100b that is one of the other recording and reproducing devices 100 recorded a program content that was not recorded by the digital television 200 and thus not registered as program information in the metadata of the digital television 200.

The integration module 303 registers (copies), in the position indicated by reference sign 401 in the metadata of the digital television 200 illustrated in FIG. 4, the program information in the time period from 13:00 to 15:00 on August 15 indicated by reference sign 801 in the metadata illustrated in FIG. 8 collected from the recording and reproducing device 100a. The integration module 303 also registers (copies), in the position indicated by reference sign 402 in the metadata of the digital television 200 illustrated in FIG. 4, the program information on the channel 100 on August 15 indicated by reference sign 802 in the metadata illustrated in FIG. 9 collected from the digital television 100b.

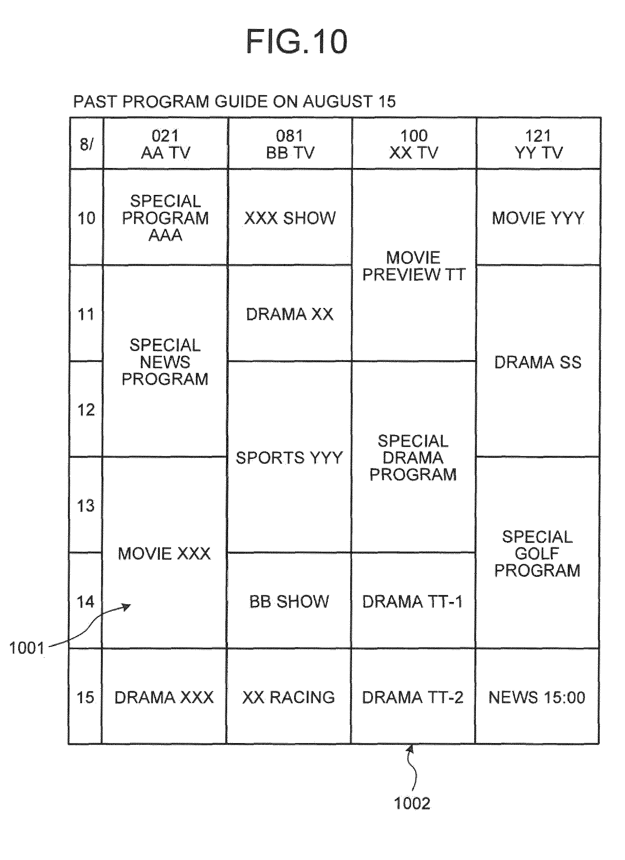

After the merger (integration) of the metadata illustrated in FIGS. 8 and 9 into the metadata of the digital television 200, the metadata of the digital television 200 is all filled with program information (has no unrecorded part). When the graphic processor 207 and the video processor 210 display, at S13 described above, on the display unit 211, a past program guide created from the metadata after the merger, the past program guide is all filled with program information as illustrated in FIG. 10. In other words, in FIG. 10, the part indicated by reference sign 1001 displays the program information not recorded by the digital television 200 during the time period from 13:00 to 15:00 on August 15, and the part indicated by reference sign 1002 displays the program information on the channel 100 not recorded by the digital television 200 on August 15.

The past program guide displayed on the display unit 211 of the digital television 200 does not distinguish program information on a program content recorded by the other recording and reproducing devices 100 from program information on a program content recorded by the digital television 200. This is because, with the time-shift machine function, a user does not specify a certain program in advance for recording, but the user leaves the digital television 200 to automatically record a plurality of channels simultaneously using the time-shift machine function, and then selects a program in the past program guide so that the program is reproduced. Thus, there is no particular need for the user to distinguish a program recorded by the digital television 200 from a program recorded by the other recording and reproducing devices 100.

When the user selects program information, such as program information indicated by reference sign 1001 or 1002, on a program content not recorded by the digital television 200 to reproduce the program content, the reproduction module 306 uses the DLNA function to obtain and reproduce the program content selected by the user from a device among the other recording and reproducing devices 100 that recorded the program content selected.

In the first embodiment, the digital television 200 collects metadata from the other recording and reproducing devices 100 and merges metadata by registering, from the collected metadata, program information on a program not recorded in the metadata of the digital television 200. This enables the digital television 200 in the first embodiment to display a list of program contents comprising a program content in a certain time period that was not recorded by the digital television 200 because the user had set the time period not to be recorded in the time-shift machine function, and a program content that was not recorded by the digital television 200 because of a limitation of recordable channels by the digital television 200. The list of program contents does not distinguish program contents recorded by the digital television 200 from program contents recorded by the other recording and reproducing devices 100. According to the first embodiment, the user can consult a list of program contents covering all the channels and all the time periods, so that the user can easily find program contents that the user wants to watch.

### Second Embodiment

The following describes a second embodiment that duffers from the first embodiment in that, in the first embodiment, the collection module 301 collects metadata from the other recording and reproducing devices 100 at regular intervals and the integration module 303 integrates the collected metadata into metadata of the digital television 200, but in the second embodiment, metadata is collected and integrated when a past program guide is started up, or when a user instructs the digital television 200 to switch pages of the past program guide.

In the second embodiment, when metadata is being collected or integrated and program information is thus not yet registered in an unrecorded part of a past program guide, a message of retrieving program information is displayed on the unrecorded part of the past program guide.

The network configuration of a recording and reproducing system according to the second embodiment, the configuration of a main signal processing system of the digital television 200 according to the second embodiment, and the functional configuration of the controller 205 of the digital television 200 according to the second embodiment with regard to a recording and reproducing function are the same as those of the first embodiment. In the second embodiment, the collection module 301 collects metadata from the other recording and reproducing devices 100 when a past program guide is displayed, or a page of the past program guide is switched (when another page of the past program guide is displayed).

The input controller 307 receives an instruction from a user to start up a past program guide or switch pages of the past program guide through the operating module 220, or the remote controller 102 via the light receiver 221.

The determination module 302 determines whether the metadata collected from the other recording and reproducing devices 100 contains program information not recorded in the metadata of the digital television 200 when a past program guide is displayed or a page of the past program guide is switched (when another page of the past program guide is displayed).

The integration module 303 merges (integrates) program information not recorded in the metadata of the digital television 200 but recorded in the metadata collected from the other recording and reproducing devices 100 into the metadata of the digital television 200 when a past program guide is displayed or a page of the past program guide is switched (when another page of the past program guide is displayed).

When a past program guide is displayed on the display unit 211, the graphic processor 207 and the video processor 210 display a message of retrieving program information on an unrecorded part of the past program guide displayed on the display unit 211 during a time from collection of metadata from the other recording and reproducing devices 100 to merger of the collected metadata.

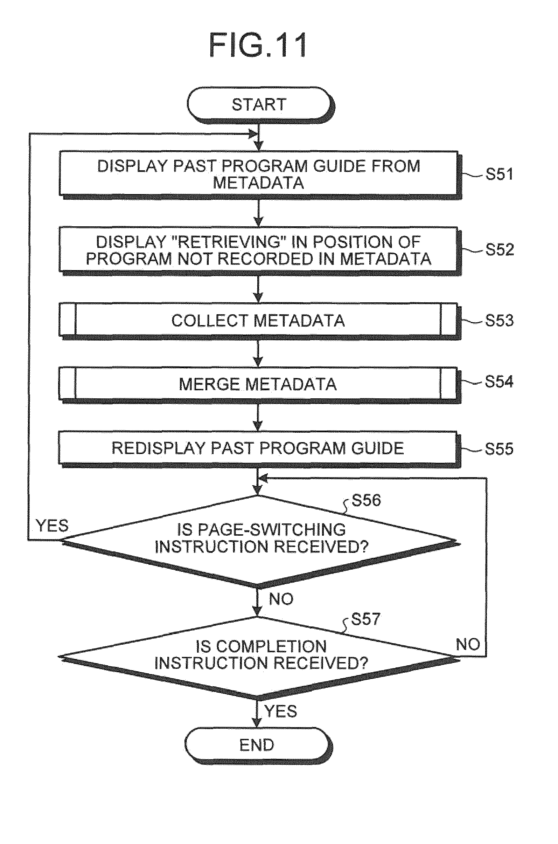

Next, with reference to FIG. 11, described is the procedure for displaying a program guide on the digital television 200 according to the second embodiment configured as described above.

When a user instructs the digital television 200 to start up a past program guide, the graphic processor 207 and the video processor 210 display, on the display unit 211, a past program guide created from the metadata of the digital television 200 (S51). The graphic processor 207 and the video processor 210 display a message "retrieving" on an unrecorded part in the past program guide, that is, the position of a program not recorded by the digital television 200 (S52).

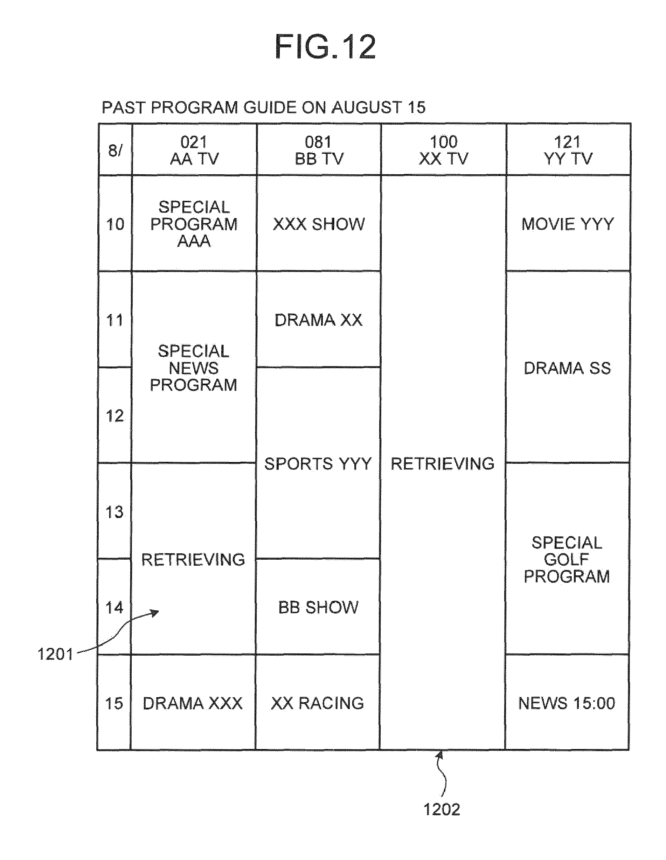

FIG. 12 illustrates an example of a past program guide that displays a message "retrieving" on unrecorded parts of the past program guide in the second embodiment. As illustrated in FIG. 12, the unrecorded parts indicated by reference signs 1201 and 1202 display a message "retrieving".

Back to FIG. 11, the collection module 301 collects metadata (S53). The collection of metadata at S53 is performed in the same manner as in the first embodiment. Then, the determination module 302 and the integration module 303 merge the metadata (S54). The merger of metadata at S54 is performed in the same manner as in the first embodiment.

The graphic processor 207 and the video processor 210 redisplay the past program guide created from the merged metadata on the display unit 211 (S55). At S55, the unrecorded parts indicated by reference signs 1201 and 1202 in FIG. 12 are filled with program information, so that the display unit 211 displays a past program guide such as the past program guide illustrated in FIG. 10 that is all filled with program information.

When the input controller 307 receives an instruction from a user to switch a page to the next page, the previous page, or any other page designated by the user while the past program guide is being displayed (Yes at S56), the process returns to S51, at which the graphic processor 207 and the video processor 210 display a page of the past program guide on the display unit 211 according to the instruction from the user. After that, the processes from S52 to S55 are performed. In other words, when switching pages, the digital television 200 also displays, on the past program guide, the message "retrieving" in the position of a program not recorded by the digital television 200, and collects and merges metadata, and redisplays the past program guide in the page of the past program guide.

When the input controller 307 does not receive any instruction from the user to switch pages at S56 (No at S56), the input controller 307 determines whether a completion instruction is received from the user (S57) . When the completion instruction is not received (No at S57), the process returns to S56. When the completion instruction is received from the user (Yes at S57), the process is completed.

In the second embodiment, when a user instructs the digital television 200 to start up a past program guide, or switch a page of the past program guide, the digital television 200 collects and integrates metadata. This enables the digital television 200 to display the latest information every time it displays a past program guide, thus benefiting the user.

In the second embodiment, when collecting and integrating metadata, the digital television 200 displays a message of retrieving program information in unrecorded parts of the program information on the past program guide. This can give information to the user that a complete past program guide will soon be displayed even when some parts of the past program guide are not filled with program information because the digital television 200 did not record.

### Third Embodiment

The following describes a third embodiment in which, when a user searches metadata for program information under a certain display condition, the user can retrieve program information satisfying the display condition both from the metadata of the digital television 200 and from the metadata collected from the other recording and reproducing devices 100.

The network configuration of a recording and reproducing system according to the third embodiment and the configuration of a main signal processing system of the digital television 200 according to the third embodiment are the same as those of the first embodiment.

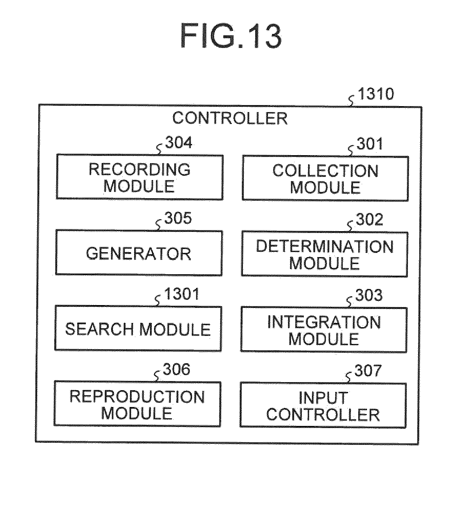

As illustrated in FIG. 13, a controller 1310 according to the third embodiment mainly comprises the collection module 301, the determination module 302, the integration module 303, the recording module 304, the generator 305, the reproduction module 306, the input controller 307, and a search module 1301. The collection module 301, the determination module 302, the integration module 303, the recording module 304, the generator 305, the reproduction module 306 in the third embodiment have the same functions as those in the first embodiment.

The input controller 307 receives input of a certain display condition by a user from the remote controller 102 or the operating module 220.

The search module 1301 searches the metadata of the digital television 200 into which the metadata of the other recording and reproducing devices 100 is integrated for program information on one or a plurality of program contents satisfying the display condition input by the user.

The graphic processor 207 and the video processor 210 according to the third embodiment display, on the display unit 211, program information on one or a plurality of program contents found in the search as Zanmai Play. Zanmai Play is a function of displaying program information on one or a plurality of program contents satisfying a display condition input by the user (for example, program information on one or a plurality of program contents found in a search under a display condition such as a genre that the user likes). With this function, the display unit 211 displays a list of program information for Zanmai Play.

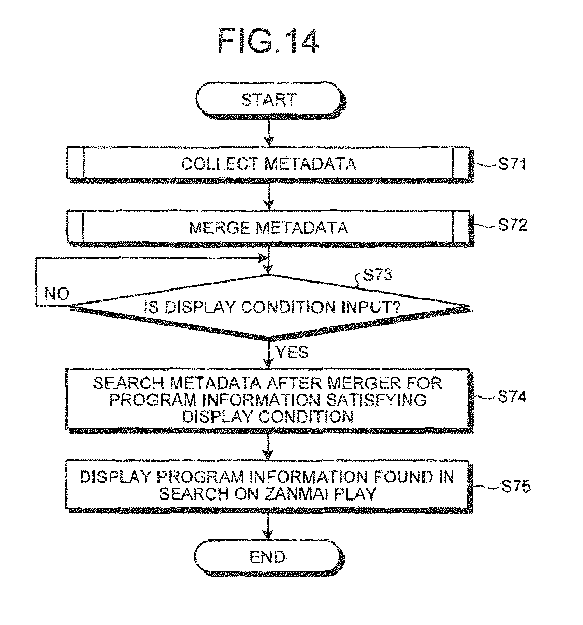

Next, with reference to FIG. 14, described is the procedure for displaying Zanmai Play on the digital television 200 according to the third embodiment configured as described above. First, the collection module 301 collects metadata (S71). The collection module 301 collects metadata in the same manner as in the first embodiment. Then, the determination module 302 and the integration module 303 merge metadata (S72). The merger of the metadata is performed in the same manner as in the first embodiment. The input controller 307 waits for a certain display condition input by a user (No at S73).

When the input controller 307 receives a certain display condition input by the user (Yes at S73), the search module 1301 searches the metadata of the digital television 200 into which the metadata of the other recording and reproducing devices 100 is merged for program information on one or a plurality of program contents satisfying the display condition input by the user (S74).

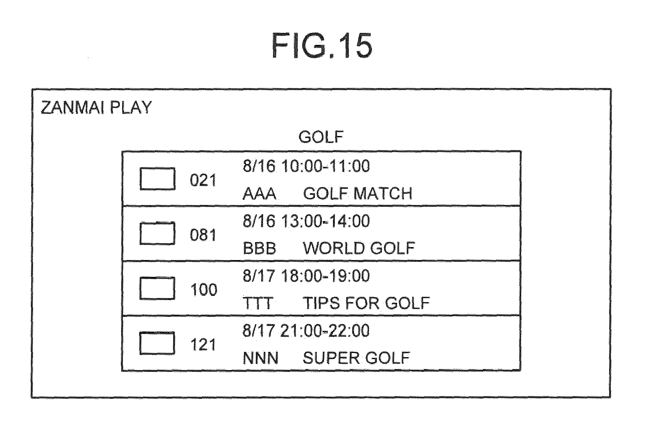

The graphic processor 207 and the video processor 210 display, on the display unit 211, program information on one or a plurality of program contents found in the search as Zanmai Play (S75). FIG. 15 illustrates an example of display of Zanmai Play according to the third embodiment. The example of FIG. 15 illustrates a case in which a display condition "golf" is input to search for program information relevant to golf, and program information found in the search is displayed as Zanmai Play.

Program information displayed as Zanmai Play comprises both program information on program contents recorded by the digital television 200 and program information on program contents recorded by the other recording and reproducing devices 100. When the user instructs the digital television 200 to reproduce program information on a program content not recorded by the digital television 200, the reproduction module 30 obtains, using the DLNA function, the program content specified by the user from a device among the other recording and reproducing devices 100 that recorded the program content specified, and reproduces the content.

In the third embodiment, when a user inputs a certain display condition to display program information as Zanmai Play, the digital television 200 not only searches the metadata of its own, but collects metadata from the other recording and reproducing devices 100, integrates the collected metadata into the own metadata, and searches the metadata after the integration for the program information satisfying the display condition. This enables the digital television 200 in the third embodiment to display program information satisfying the display condition recorded by the other recording and reproducing devices 100 in the network, and program information satisfying the display condition recorded by the digital television 200 without distinguishing one from the other. Thus, the user can consult a list of all the recommended program information in the network, and easily search for a program content in Zanmai Play.

Although the embodiments above describe, as an example, the digital television 200 that has a recording and reproducing function, a device that has a recording and reproducing function other than the digital television may be used.

Although the digital television 200 according to the embodiments collects metadata by sending a request for metadata to the other recording and reproducing devices 100, the embodiments are not limited to this. The other recording and reproducing devices 100 may be configured to automatically transmit metadata to the digital television 200.

Although the collection module 301 according to the embodiments collects metadata at regular intervals, at the time of starting up a past program guide, or at the time of switching a page of the past program guide, the collection timing of metadata is not limited to these. For example, the collection module 301 may be configured to collect metadata upon receiving an explicit instruction from a user.

Moreover, the various modules of the system described herein can be implemented as software applications, hardware and/or software modules, or components on one or more computers, such as servers. Although the various modules are illustrated separately, they may share some or all of the same underlying logic or code.

While certain embodiments have been described, these embodiments have been presented by way of example only, and are not intended to limit the scope of the inventions. Indeed, the novel embodiments described herein may be embodied in a variety of other forms; furthermore, various omissions, substitutions and changes in the form of the embodiments described herein may be made without departing from the spirit of the inventions. The accompanying claims and their equivalents are intended to cover such forms or modifications as would fall within the scope and spirit of the inventions.

## Claims

1. A recording and reproducing device (200), comprising:
a recording module (304) configured to simultaneously record programs on a plurality of channels as program contents to store, in a storage (270), the recorded program contents;
a generator (305) configured to generate first relevant information being a list of program information on the recorded program contents;
a collection module (301) configured to collect, from one or a plurality of other recording and reproducing devices (100) connected to a network, second relevant information being a list of program information on program contents recorded by the other recording and reproducing devices (100);
a determination module (302) configured to determine whether the second relevant information contains second program information being program information not registered in the first relevant information;
an integration module (303) configured to integrate, when the determination module (302) determines that the second relevant information contains the second program information, the second program information in the second relevant information into the first relevant information; and
a display module (207, 210, 211) configured to display, as a past program guide, the first relevant information into which the second program information is integrated.

2. The recording and reproducing device (200) of Claim 1, wherein
the collection module (301) is configured to collect the second relevant information from the other recording and reproducing devices (100) at regular intervals;
the determination module (302) is configured to determine, at the regular intervals, whether the second relevant information contains the second program information, and
the integration module (303) is configured to integrate the second program information in the second relevant information into the first relevant information at the regular intervals.

3. The recording and reproducing device (200) of Claim 1 or 2, wherein
the collection module (301) is configured to collect the second relevant information from the other recording and reproducing devices (100) when the past program guide is displayed;
the determination module (302) is configured to determine, when the past program guide is displayed, whether the second relevant information contains the second program information; and
the integration module (303) is configured to integrate the second program information in the second relevant information into the first relevant information when the past program guide is displayed.

4. The recording and reproducing device (200) of any one of Claims 1 to 3, wherein
the collection module (301) is configured to collect the second relevant information from the other recording and reproducing devices (100) when another page of the past program guide is displayed;
the determination module (302) is configured to determine, when another page of the past program guide is displayed, whether the second relevant information contains the second program information; and
the integration module (303) is configured to integrate the second program information in the second relevant information into the first relevant information when another page of the past program guide is displayed.

5. The recording and reproducing device (200) of any one of Claims 1 to 4, wherein the display module (207, 210, 211) is configured to display, when displaying the past program guide, a message of retrieving the second relevant information from a time of collecting the second relevant information to a time of registering the second program information in the second relevant information.

6. The recording and reproducing device (200) of any one of Claims 1 to 5, further comprising:
an input controller (307) configured to receive input of a certain display condition from a user; and
a search module (1301) configured to search the first relevant information into which the second program information is integrated for program information on one or a plurality of programs satisfying the display condition, wherein
the display module (207, 210, 211) is configured to display one or a plurality of pieces of program information found in search by the search module (1301).

7. The recording and reproducing device (200) of any one of Claims 1 to 6, wherein the collection module (301) is configured to inquire of the other recording and reproducing devices (100) whether the other recording and reproducing devices (100) have a specific function of simultaneously recording programs on a plurality of channels, and to collect the second relevant information from the other recording and reproducing devices (100) that have the specific function.

8. A recording and reproducing method, comprising:
simultaneously recording programs on a plurality of channels as program contents to store, in a storage (270), the recorded program contents;
generating first relevant information being a list of program information on the recorded program contents;
collecting, from one or a plurality of other recording and reproducing devices (100) connected to a network, second relevant information being a list of program information on program contents recorded by the other recording and reproducing devices (100);
determining whether the second relevant information contains second program information being program information not registered in the first relevant information;
integrating, when the second relevant information is determined to contain the second program information, the second program information in the second relevant information into the first relevant information; and
displaying, as a past program guide, the first relevant information into which the second program information is integrated.
